# EUROPEAN PATENT SPECIFICATION

(11) **EP 3 121 230 B1**
(45) Date of publication and mention of the grant of the patent: **08.05.2019**
(21) Application number: 15765984.8
(22) Date of filing: 16.03.2015
(51) Int. Cl.: C08L 29/04, B32B 27/30, B32B 27/32, B65D 65/40, B65D 77/06, C08K 5/098, C08L 23/08, C08L 23/26, B32B 27/18, C09D 5/00, C08J 7/04

(54) **RESIN COMPOSITION, MULTI-LAYER STRUCTURE, AND BAG-IN-BOX INNER CONTAINER**
HARZZUSAMMENSETZUNG, MEHRSCHICHTIGE STRUKTUR UND BAG-IN-BOX-INNENBEHÄLTER
COMPOSITION DE RÉSINE, STRUCTURE MULTICOUCHE, ET CONTENANT INTERNE DE CAISSE-OUTRE

(30) Priority: 17.03.2014 JP 2014054186
(43) Date of publication of application: 25.01.2017
(73) Proprietor: Kuraray Co., Ltd., Okayama 710-0801 (JP)
(72) Inventor: HIROSE, Wataru, Kurashiki-shi Okayama 713-8550 (JP)
(74) Representative: Müller-Boré & Partner Patentanwälte PartG mbB
(86) International application number: PCT/JP2015/057621
(87) International publication number: WO 2015/141610

(56) References cited:
- EP-A2- 0 560 369
- JP-A- H 101 569
- JP-A- H0 827 332
- JP-A- H05 255 555
- JP-A- H08 165 397
- JP-A- H10 204 229
- JP-A- 2000 246 843
- JP-A- 2007 016 117
- JP-A- 2007 126 586
- JP-A- 2007 161 879
- US-A1- 2012 052 225

## Description

### TECHNICAL FIELD

The present invention relates to a resin composition containing an ethylene-vinyl alcohol copolymer (hereinafter, may be abbreviated as EVOH). The present invention also relates to a multilayer structure having a layer of the resin composition. The present invention further relates to an inner container for a bag-in-box having the multilayer structure.

### BACKGROUND ART

EVOH exhibits excellent barrier properties to a gas such as oxygen and excellent melt moldability. It is, therefore, processed into a film or the like, and widely used as a food packaging material or the like. EVOH films are, however, rigid due to its high crystallinity and, therefore, have a disadvantage of easily creating pinholes by bending.

Meanwhile, taking advantage of convenience, light weight, drop resistance, and the like, bag-in-boxes has been increasingly used in recent years for transport and storage of liquid for beverages, such as mineral water and wine. Such bag-in-box has a flexible plastic inner container (an inner container for a bag-in-box) provided with a liquid inlet stored inside a corrugated cardboard box. As some of the inner containers, a multilayer structure having an EVOH layer is used.

Such inner container for a bag-in-box is, however, repeatedly bent during transport and a multilayer structure having a conventional EVOH layer may create pinholes during transport. To solve such problem, inner containers for a bag-in-box excellent in flexibility and bending resistance are proposed.

For instance, Patent Document 1 describes a bag-in-box including a flexible laminated packaging material containing at least one layer of a resin composition having an EVOH resin, a polyamide resin, an olefin-unsaturated carboxylic acid copolymer, and a thermoplastic resin (rubber component, such as an ethylene-propylene copolymer and butadiene rubber) having an elastic modulus at 20°C of 100 kgf/cm² or less that are blended at a predetermined ratio.

Patent Document 2 describes an inner container for a bag-in-box having an intermediate layer of a resin composition that is obtained by blending an EVOH resin with a polyolefin-based resin and a carboxylic acid modified polyolefin-based resin to be extruded at an energy value in a predetermined range.

Patent Document 3 describes a bag for a bag-in-box of a multilayer structure using a resin composition composed of a mixture of an EVOH resin, an olefin-based polymer, a carboxylic acid modified olefin-based polymer, and a hydrocarbon-based resin having a number-average molecular weight of from 100 to 3000 and a softening point of not less than 60°C and less than 170°C.

Patent Document 4 describes a bag for a bag-in-box of a multilayer structure using EVOH resin composition containing a saponified ethylene-vinyl ester copolymer having an ethylene content of from 20 to 60 mol%, a polymer having an aliphatic hydrocarbon monomer unit containing a carbon-carbon double bond and a melt flow rate in the conditions at 230°C under a load of 2160 g of from 0.01 to 200 g/10 min., a polymer modified by a polar group containing compound that has an aliphatic hydrocarbon monomer unit containing a carbon-carbon double bond and a melt flow rate in the conditions at 230°C under a load of 2160 g of from 0.01 to 200 g/10 min., and a hydrocarbon-based resin having a number-average molecular weight of from 100 to 3000 and a softening point of not less than 60°C and less than 170°C.

Patent Document 5 describes a bag-in-box inner container of a multilayer structure using a resin composition composed of a copolymer (A) produced using a single site catalyst and having ethylene as a main component with a density of from 0.85 to 0.90 g/cm³ and an ethylene-vinyl alcohol copolymer (B) having an ethylene content of from 20 to 60 mol% and a degree of saponification of 95% or more, wherein a weight ratio ((A)/(B)) of (A) to (B) above is from 1/99 to 40/60.

### PRIOR ART DOCUMENTS

### PATENT DOCUMENTS

Patent Document 1: JP2000-248136 A
Patent Document 2: JP08-165397 A
Patent Document 3: JP2011-202147 A
Patent Document 4: WO 2010/137659 A1
Patent Document 5: JP10-306180 A

### SUMMARY OF THE INVENTION

### PROBLEM TO BE SOLVED BY THE INVENTION

In view of the above background, an object of the present invention is to provide a resin composition excellent in stability for extrusion when formed into a shaped article without employing a special extrusion condition, for example, an energy value in a predetermined range for extrusion. Another object of the present invention is to provide a multilayer structure having excellent oxygen barrier properties and high flexibility and bending resistance. Still another object of the present invention is to provide an inner container for a bag-in-box excellent in mechanical strength, such as pinhole resistance.

### MEANS FOR SOLVING PROBLEM

To solve the above problems, the present inventors have made extensive investigations to find that a resin composition having a melt flow rate (MFR) in a specific range is obtained by blending alkali metal salt (D), in addition to an unmodified ethylene-α-olefin copolymer (B), an acid modified ethylene-α-olefin copolymer (C), and an ethylene-vinyl alcohol copolymer (A) having an MFR in a specific range at a specific ratio. The resin composition is excellent in stability for extrusion when formed into a shaped article. A shaped article and a multilayer structure obtained by using the resin composition are excellent in oxygen barrier properties, flexibility, and bending resistance. An inner container for a bag-in-box provided with the multilayer structure is excellent in mechanical strength, such as pinhole resistance.

That is, the above problems are solved by providing a resin composition comprising: an ethylene-vinyl alcohol copolymer (A); an unmodified ethylene-α-olefin copolymer (B); an acid modified ethylene-α-olefin copolymer (C); and alkali metal salt (D), wherein a mass ratio [(A)/((B)+(C))] of the ethylene-vinyl alcohol copolymer (A) to a total amount of the unmodified ethylene-α-olefin copolymer (B) and the acid modified ethylene-α-olefin copolymer (C) is from 80/20 to 65/35, a mass ratio [(B)/(C)] of the unmodified ethylene-α-olefin copolymer (B) to the acid modified ethylene-α-olefin copolymer (C) is from 92/8 to 70/30, the ethylene-vinyl alcohol copolymer (A) has a melt flow rate (MFR) (at 210°C under a load of 2160 g) of not less than 8.0 g/10 min. and not more than 15 g/10 min., a content of the alkali metal salt (D) is not less than 25 ppm and not more than 300 ppm in terms of metal based on a total amount of the ethylene-vinyl alcohol copolymer (A), the unmodified ethylene-α-olefin copolymer (B), and the acid modified ethylene-α-olefin copolymer (C), and the resin composition has an MFR (at 210°C under a load of 2160 g) of not less than 2.0 g/10 min. and not more than 4.0 g/10 min.

Here, it is preferred that the unmodified ethylene-α-olefin copolymer (B) is an ethylene-propylene copolymer. It is also preferred that the modified ethylene-α-olefin copolymer (C) is a maleic anhydride modified ethylene-propylene copolymer.

It is also preferred that the above resin composition has an oxygen transmission rate at 20°C/65% RH is 10 ml•20 µm/(m²•day•atm) or less.

A multilayer structure comprising a layer of the above resin composition is a preferred embodiment of the present invention. An inner container for a bag-in-box comprising the multilayer structure is also a preferred embodiment of the present invention.

### EFFECT OF THE INVENTION

In the present invention, reaction of the EVOH (A) with the acid modified ethylene-α-olefin copolymer (C) is accelerated while melt kneaded and, without special extrusion conditions, a resin composition can be obtained in which the unmodified ethylene-α-olefin copolymer (B) is microdispersed. In addition, in the resin composition, compatibility of the EVOH (A), the unmodified ethylene-α-olefin copolymer (B), and the acid modified ethylene-α-olefin copolymer (C) becomes good, and thus the amount of resin adhesion to the die (die build-up) during extrusion is less and the resin composition has excellent stability during extrusion. The multilayer structure obtained by using the resin composition has a layer with excellent oxygen barrier property and high flexibility and bending resistance. The inner container for a bag-in-box provided with at least one layer composed of the resin composition is, due to the specific MFR of the resin composition, excellent in oxygen barrier properties, flexibility, and bending resistance and also has a good appearance.

Use of the resin composition of the present invention enables production of a shaped article, a multilayer structure, and an inner container for a bag-in-box that are excellent in flexibility and bending resistance. The multilayer structure obtained by using the resin composition of the present invention is useful as a flexible packaging material. Since such multilayer structure has particularly excellent bending resistance, it can be used for an inner container for a bag-in-box that is subjected to repeated bending during transport.

### MODE FOR CARRYING OUT THE INVENTION

Descriptions are given below to embodiments of a resin composition, a multilayer structure, and an inner container for a bag-in-box of the present invention. In the following descriptions, specific materials are sometimes exemplarily mentioned as those exhibiting a particular function while materials applicable to the present invention are not limited to these materials. Furthermore, unless otherwise specified, the exemplarily mentioned materials may be used alone or in combination of two or more.

### [Resin composition]

A resin composition of the present invention contains an ethylene-vinyl alcohol copolymer (EVOH) (A), an unmodified ethylene-α-olefin copolymer (B), an acid modified ethylene-α-olefin copolymer (C), and alkali metal salt (D). The resin composition may further contain other components without inhibiting the effects of the present invention.

### [EVOH (A)]

The EVOH (A) is a copolymer mainly containing ethylene units and vinyl alcohol units. The EVOH (A) is prepared by, for example, saponifying a copolymer of ethylene and vinyl ester using an alkaline catalyst and the like. Examples of the vinyl ester typically include vinyl acetate, but other aliphatic acid vinyl esters (vinyl propionate, vinyl pivalate, and the like) may be employed.

The EVOH (A) may be copolymerized with, for example, a vinylsilane compound, propylene, butylene, an unsaturated carboxylic acid or ester thereof, vinyl pyrrolidone, and the like as a copolymerization component.

An ethylene content in the EVOH (A) is preferably not less than 20 mol% and not more than 60 mol%. If the ethylene content is less than 20 mol%, melt moldability of the resin composition produced therefrom is reduced. The lower limit of the ethylene content is more preferably 25 mol% or more and even more preferably 27 mol% or more. In contrast, if the ethylene content is more than 60 mol%, oxygen barrier properties of the resin composition produced therefrom are reduced. The upper limit of the ethylene content is more preferably 55 mol% or less and even more preferably 50 mol% or less.

A degree of saponification of the EVOH (A) is, although not particularly limited, preferably 90 mol% or more, more preferably 95 mol% or more, and even more preferably 99 mol% or more. The degree of saponification of the EVOH (A) within the above range is preferred from the perspective of maintaining oxygen barrier properties of a resin composition produced therefrom.

The EVOH (A) has a melt flow rate (MFR) at 210°C under a load of 2160 g is not less than 8.0 g/10 min. and not more than 15.0 g/10 min. The use of the EVOH (A) having such MFR enables more enhancement of stability during extrusion of the resin composition produced therefrom. The lower limit of the MFR of the EVOH (A) is preferably 9.0 g/10 min. or more and the upper limit is preferably 12.0 g/10 min. or less.

As the EVOH (A), a modified ethylene-vinyl alcohol copolymer may be used that is produced by modifying EVOH with an epoxy compound having a hydrocarbon chain with a carbon number of from 2 to 8. Since the modified EVOH has low crystallinity and is flexible, a multilayer structure produced from the resin composition using the modified EVOH has excellent bending resistance. The EVOH (A) may be used singly or in combination of two or more.

### [Unmodified Ethylene-α-Olefin Copolymer (B)]

The unmodified ethylene-α-olefin copolymer (B) used for the present invention is not particularly limited and examples of it include, for example, an ethylene-propylene copolymer (EP), an ethylene-butene copolymer (EB), a propylene-butylene copolymer (PB), a butylene-ethylene copolymer (BE), and the like. Among them, from the perspective of excellent flexibility and improved bending resistance of a shaped article and a multilayer structure using a resin composition produced therefrom, an ethylene-propylene copolymer (EP) and an ethylene-butene copolymer (EB) are preferred and an ethylene-propylene copolymer (EP) is more preferred.

The unmodified ethylene-α-olefin copolymer (B) has a density of preferably 0.9 g/cm³ or less, more preferably 0.89 g/cm³ or less, and even more preferably 0.88 g/cm³ or less. The use of such unmodified ethylene-α-olefin copolymer (B) having a low density enables production of a shaped article and a multilayer structure particularly excellent in bending resistance. The unmodified ethylene-α-olefin copolymer (B) generally has a density of 0.85 g/cm³ or more.

The unmodified ethylene-α-olefin copolymer (B) preferably has an MFR at 210°C under a load of 2160 g of not less than 1.0 g/10 min. and not more than 100 g/10 min. The use of such unmodified ethylene-α-olefin copolymer (B) enables more enhancement of stability while a resin composition produced therefrom is extruded and bending resistance of a shaped article produced therefrom. The lower limit of the MFR is more preferably 2.0 g/10 min. or more and the upper limit is more preferably 60 g/10 min. or less. Here, the "unmodified ethylene-α-olefin copolymer" means an ethylene-α-olefin copolymer not subjected to acid modification and means, for example, an ethylene-α-olefin copolymer that is not [the acid modified ethylene-α-olefin copolymer (C)] described below. The unmodified ethylene-α-olefin copolymer (B) used for the present invention preferably has an acid value less than 0.5 mg KOH/g.

### [Acid Modified Ethylene-α-Olefin Copolymer (C)]

The acid modified ethylene-α-olefin copolymer (C) used for the present invention is obtained by copolymerization in which part of monomers constituting an ethylene-α-olefin copolymer is substituted by α,β-unsaturated carboxylic acid or anhydride monomers thereof or by introducing α,β-unsaturated carboxylic acid or an anhydride thereof to part of side chains by graft reaction, such as radical addition.

Examples of the α,β-unsaturated carboxylic acid or an anhydride thereof used in the above acid-modification include maleic acid, acrylic acid, itaconic acid, crotonic acid, maleic anhydride, and itaconic anhydride. Among all, maleic anhydride is used preferably.

The acid modified ethylene-α-olefin copolymer (C) has an acid value of preferably 50 mg KOH/g or less. If the acid value is higher than the range, reaction points with hydroxyl groups in the EVOH (A) are so increased that high polymers are formed in the course of melt kneading, leading to reduction in stability during extrusion and tendency not to easily produce a good shaped article. The upper limit of the acid value is more preferably 30 mg KOH/g or less and even more preferably 20 mg KOH/g or less. In contrast, if the acid value is lower, compatibility with the EVOH (A) is reduced, leading to tendency to increase the amount of the resin adhered to the die (die build-up). The lower limit of the acid value is preferably 1 mg KOH/g or more and more preferably 2 mg KOH/g or more.

The acid modified ethylene-α-olefin copolymer (C) has a density of preferably 0.9 g/cm³ or less, more preferably 0.89 g/cm³ or less, and even more preferably 0.88 g/cm³ or less. The use of such low density acid modified ethylene-α-olefin copolymer (C) enables production of a shaped article and a multilayer structure particularly excellent in bending resistance. The acid modified ethylene-α-olefin copolymer (C) generally has a density of 0.85 g/cm³ or more.

In the resin composition of the present invention, the acid modified ethylene-α-olefin copolymer (C) is considered to have high compatibility with the EVOH (A) and also function as a compatibilizer for the EVOH (A) and the unmodified ethylene-α-olefin copolymer (B). By reaction of the acid modified ethylene-α-olefin copolymer (C) with the hydroxyl groups in the EVOH (A) while the resin composition is kneaded in a twin screw extruder for preparation, a graft polymer of the EVOH (A) and the acid modified ethylene-α-olefin copolymer (C) is produced. Such graft polymer has compatibility with the EVOH (A) and further exhibits a compatibility effect with the EVOH (A) and the unmodified ethylene-α-olefin copolymer (B). This causes microdispersion of the unmodified ethylene-α-olefin copolymer (B) in the EVOH (A) to improve the stability of the resin composition during extrusion and also improve the bending resistance of a shaped article produced using the resin composition.

### [Mass Ratio of (A), (B), and (C)]

In the resin composition of the present invention, a mass ratio [(A)/((B)+(C))] of an amount of the EVOH (A) to a total amount of the unmodified ethylene-α-olefin copolymer (B) and the acid modified ethylene-α-olefin copolymer (C) is, from the perspective of both stability during extrusion and oxygen barrier properties, flexibility, and bending resistance of a shaped article produced therefrom, is from 80/20 to 65/35. If the mass ratio [(A)/((B)+(C))] is more than 80/20 or the unmodified ethylene-α-olefin copolymer (B) and the acid modified ethylene-α-olefin copolymer (C) are not contained, flexibility and bending resistance of a shaped article produced therefrom are insufficient. In contrast, if the mass ratio [(A)/((B)+(C))] is less than 65/35, the amount of the resin adhered to the die (die build-up) during extrusion increases, and the EVOH (A) will not be a matrix phase resulting in insufficient oxygen barrier properties of the shaped article. In a multilayer structure, specifically a multilayer film, produced using the resin composition of the present invention, from the perspective of further suppressing streaks caused on the film surface, the upper limit of the mass ratio is preferably 75/25 or less. From the same perspective, the lower limit of the mass ratio is preferably 67/33 or more and more preferably 70/30 or more.

### [Mass Ratio of (B) and (C)]

A mass ratio [(B)/(C)] of the unmodified ethylene-α-olefin copolymer (B) and the acid modified ethylene-α-olefin copolymer (C) is from 92/8 to 70/30. The mass ratio being from 92/8 to 70/30 causes the compatibility effect to be sufficient and the dispersibility of the unmodified ethylene-α-olefin copolymer (B) in the EVOH (A) to be good. If the mass ratio is more than 92/8 or the acid modified ethylene-α-olefin copolymer (C) is not contained, there are less graft polymers produced by the reaction of the EVOH (A) with the acid modified ethylene-α-olefin copolymer (C) in the resin composition or there is no graft polymer produced by the reaction with the EVOH (A), resulting in poor compatibility between the EVOH (A) and the unmodified ethylene-α-olefin copolymer (B). As a result, the amount of the resin adhered to the die (die build-up) during extrusion increases. The mass ratio is preferably 90/10 or less. In contrast, if the mass ratio is less than 70/30, graft polymers produced by the reaction of the EVOH (A) with the acid modified ethylene-α-olefin copolymer (C) in the resin composition increase and entanglement of the molecular chains increases, resulting in poor stability during extrusion and not easily producing a good shaped article. In a multilayer structure, specifically a multilayer film, produced using the resin composition of the present invention, from the perspective of further suppressing streaks caused on the film surface, the mass ratio is preferably 80/20 or more, more preferably 82/18 or more, and even more preferably 85/15 or more.

### [Alkali Metal Salt (D)]

From the perspective of accelerating the reaction of the EVOH (A) with the acid modified ethylene-α-olefin copolymer (C), the resin composition of the present invention has to contain the alkali metal salt (D). The alkali metal salt (D) acts as a catalyst for the reaction of producing ester groups from hydroxyl groups in the EVOH (A) and acid and anhydride groups in the acid modified ethylene-α-olefin copolymer (C). Containing the alkali metal salt (D) facilitates production of graft polymers. Therefore, the present invention enables to obtain a resin composition, without employing special extrusion conditions, that has the unmodified ethylene-α-olefin copolymer (B) microdispersed in the EVOH (A), that is excellent in flexibility and bending resistance, that has a particular MFR, and that is excellent in stability during extrusion.

The alkali metal salt (D) used for the present invention is not particularly limited and examples include, for example, sodium acetate, potassium acetate, potassium hydrogencarbonate, dipotassium hydrogenphosphate, sodium phosphate, lithium phosphate, sodium stearate, potassium stearate, sodium salt of ethylenediaminetetraacetic acid, and the like. Among them, from the perspective of accelerating reaction of the EVOH (A) with the acid modified ethylene-α-olefin copolymer (C), potassium salt, such as potassium acetate, potassium hydrogencarbonate, dipotassium hydrogenphosphate, and potassium stearate, is preferred and potassium hydrogencarbonate, dipotassium hydrogenphosphate, and potassium stearate are more preferred. In addition, from the perspective of compatibility, carboxylic acid salt is preferred, and metal salt of higher fatty acid having a carbon number of from 10 to 26, such as lauric acid, stearic acid, myristic acid, behenic acid, and montanoic acid, is more preferred.

The content of the alkali metal salt (D) is not less than 25 ppm and not more than 300 ppm in terms of metal based on a total amount of the EVOH (A), the unmodified ethylene-α-olefin copolymer (B), and the acid modified ethylene-α-olefin copolymer (C). If the content of the alkali metal salt (D) is less than 25 ppm in terms of metal, the reaction of the EVOH (A) with the acid modified ethylene-α-olefin copolymer (C) is insufficient, causing poor compatibility between the EVOH (A) and the unmodified ethylene-α-olefin copolymer (B). Thereby, the amount of the resin adhered to die (die build-up) increases during extrusion. From the perspective of further suppressing streaks caused on the film surface in a multilayer structure, specifically a multilayer film, produced using the resin composition of the present invention, the lower limit of the content is preferably 50 ppm or more, more preferably 70 ppm or more, and even more preferably 100 ppm or more. In contrast, if the content of the alkali metal salt (D) is more than 300 ppm in terms of metal, the reaction of the EVOH (A) with the acid modified ethylene-α-olefin copolymer (C) proceeds too much, resulting in reduction in the MFR of the resin composition and poor stability during extrusion, and thus a good shaped article is not easily obtained. The upper limit of the content is preferably 250 ppm or less and more preferably 200 ppm or less.

### [MFR of Resin Composition]

The resin composition of the present invention has an MFR at 210°C under a load of 2160 g of not less than 2.0 g/10 min. and not more than 4.0 g/10 min. Due to the MFR of the resin composition being within the range, the resin composition is excellent in stability during extrusion, and a good shaped article thereof can be obtained. The lower limit of the MFR is preferably 2.4 g/10 min. or more and more preferably 2.8 g/10 min. or more. Meanwhile, the upper limit of the MFR is preferably 3.6 g/10 min. or less and more preferably 3.2 g/10 min. or less. Appropriate adjustment of the type and the mass ratio of each component to be used enables the MFR of the resin composition to be in the above range.

### [Oxygen Transmission Rate of Resin Composition]

The resin composition of the present invention formed into a shaped article preferably has an oxygen transmission rate of 10 ml•20 µm/(m²•day•atm) or less. If the oxygen transmission rate is more than 10 ml•20 µm/(m²•day•atm), a period capable of suppressing degradation and alteration of contents packaged by the shaped article becomes short. The oxygen transmission rate is more preferably 3 ml•20 µm/(m²•day•atm) or less, even more preferably 1 ml•20 µm/(m²•day•atm) or less, and particularly preferably 0.8 ml•20 µm/(m²•day•atm) or less. The oxygen transmission rate (unit: ml•20 µm/(m²•day•atm)) of the shaped article is a value, in terms of a film thickness of 20 µm, measured in the conditions of 20°C, 65% RH, an oxygen pressure of 1 atmosphere, and a carrier gas pressure of 1 atmosphere using an oxygen transmission rate measurement system (for example, OX-Tran2/20 manufactured by Modern Controls, Inc., etc.).

### [Other Components]

From the perspective of thermal stability and viscosity adjustment, the resin composition of the present invention may contain various compounds, such as acid and metal salt. Such compounds may be carboxylic acid, phosphoric acid compounds, boron compounds, and the like and specific examples include as follows. These compounds may be used in a state of being mixed with the EVOH (A).

Carboxylic acid: oxalic acid, succinic acid, benzoic acid, citric acid, acetic acid, lactic acid, and the like;

Phosphoric acid compounds: various types of acid, such as phosphoric acid and phosphorous acid, salt thereof, and the like;

Boron compounds: boric acids, borate esters, borate salt, boron hydrides, and the like.

The resin composition of the present invention may be blended with, as needed, various additives other than compounds described above. Examples of such additives include antioxidants, plasticizers, ultraviolet absorbents, antistatic agents, lubricants, colorants, fillers, and the like. They may be blended as long as not inhibiting actions and effects of the present invention. The content of these additives in the resin composition is generally 10 mass% or less and preferably 5 mass% or less.

As long as not inhibiting the objects of the present invention, the resin composition of the present invention may be blended with a thermoplastic resin and a thermosetting resin other than the EVOH (A), the unmodified ethylene-α-olefin copolymer (B), and the acid modified ethylene-α-olefin copolymer (C). Examples of the thermoplastic resin include polyolefin other than the unmodified ethylene-α-olefin copolymer (B) and the acid modified ethylene-α-olefin copolymer (C), polyamide, polyvinyl chloride, polyvinylidene chloride, polyester, polystyrene, and the like. Examples of the thermosetting resin include epoxy resins, acrylic resins, urethane resins, polyester resins, a single material or a mixture of modified products of these resins, and the like. The content of the resin other than the EVOH (A), the unmodified ethylene-α-olefin copolymer (B), and the acid modified ethylene-α-olefin copolymer (C) in the resin composition of the present invention is generally 5 mass% or less and preferably 1 mass% or less.

### [Preparation of Resin Composition]

A method of preparing the resin composition of the present invention is not particularly limited, and examples include the following methods (1) through (5).
(1) A method in which the EVOH (A) (or a resin containing EVOH as a main component, hereinafter the same), the unmodified ethylene-α-olefin copolymer (B), the acid modified ethylene-α-olefin copolymer (C), and the alkali metal salt (D) are dry blended and melt kneaded.
(2) A method in which pellets obtained by melt kneading the unmodified ethylene-α-olefin copolymer (B), the acid modified ethylene-α-olefin copolymer (C), and the alkali metal salt (D) are dry blended with the EVOH (A) and then melt kneaded.
(3) A method in which pellets obtained by melt kneading two out of the unmodified ethylene-α-olefin copolymer (B), the acid modified ethylene-α-olefin copolymer (C), and the alkali metal salt (D) are dry blended with the EVOH (A) and the rest of the components and then melt kneaded.
(4) A method in which the unmodified ethylene-α-olefin copolymer (B) and the acid modified ethylene-α-olefin copolymer (C) are blended with part of the EVOH (A) at a high concentration to prepare a master batch, which is then dry blended with the remaining EVOH (A) and the alkali metal salt (D) to be melt-kneaded.
(5) A method in which the alkali metal salt (D) is added in advance during synthesis of the EVOH (A) to obtain pellets, which are dry blended with the unmodified ethylene-α-olefin copolymer (B) and the acid modified ethylene-α-olefin copolymer (C) and then melt kneaded.

Among them, (1) or (5) is more preferred because individual components are homogeneously blended.

Means for melt kneading for preparation of the resin composition of the present invention is not particularly limited, and examples include, for example, a ribbon blender, a high-speed mixer-cokneader, a mixing roll, an extruder (single screw or twin screw extruder, etc.), an intensive mixer, and the like. Among them, a method using a single screw or twin screw extruder is preferred. A temperature of melt kneading is appropriately selected, depending on the type and the molecular weight of resin to be used, a blending ratio of the composition, the type of extruder, and the like, and it is generally within the range of from 170 to 350°C.

When melt kneading is conducted using an extruder, it is preferred to use an extruder with a high degree of kneading, to seal a hopper port with nitrogen, and to extrude at a low temperature. This enables homogenization of the dispersed state and prevention of gelation or generation and contamination of foreign materials.

### [Shaped Article]

A shaped article produced using the resin composition of the present invention is excellent in oxygen barrier properties and has excellent flexibility and bending resistance. Examples of the forming machine to produce the shaped article include, for example, a melt extrusion molding machine, a compression molding machine, a transfer molding machine, an injection molding machine, a blow molding machine, a thermoforming machine, a rotational molding machine, a dip molding machine, and the like. Specific examples of the shaped article include a film, a sheet, a tube, a bottle, a cup, a pipe, and the like. The extrusion temperature for forming is appropriately selected depending on the type of resin to be used, a molecular weight, a blending ratio of the composition, the type of forming machine, and the like, and is generally within the range of from 170 to 350°C.

### [Multilayer Structure]

The multilayer structure of the present invention includes at least one layer of a layer of the resin composition of the present invention. The multilayer structure is excellent in oxygen barrier properties and has excellent flexibility and bending resistance. Accordingly, the multilayer structure is useful as a flexible packaging material.

The layer structure of the multilayer structure of the present invention is not particularly limited, and where E represents a layer obtained from the resin composition of the present invention, Ad represents a layer obtained from an adhesive resin, and T represents a layer obtained from a thermoplastic resin, the following layer structures are exemplarily mentioned. Here, as the adhesive resin, polyolefin modified with unsaturated carboxylic acid or a derivative thereof, for example, is used preferred. As the thermoplastic resin, polyolefin, for example, is preferred.

Two layers: Ad/ E
Three layers: T/Ad/E, Ad/E/Ad, E/Ad/E
Four layers: T/Ad/E/Ad, Ad/E/Ad/E
Five layers: E/Ad/T/Ad/E, T/Ad/E/Ad/T, Ad/E/Ad/E/Ad, T/Ad/E/Ad/E
Six layers: T/Ad/E/Ad/E/Ad
Seven layers: T/Ad/E/Ad/E/Ad/T

The layer structure of the multilayer structure of the present invention preferably does not have a layer only of the EVOH (A) as a resin component. The layer structure is more preferably only of three types, which are E, Ad, and T, because it simplifies the structure of a coextruder described later. When containing the resin composition of the present invention, the multilayer structure becomes flexible and prevents creation of pinholes by bending. Further, compared with a layer only of the EVOH (A), a layer containing the resin composition of the present invention has improved heat sealing properties.

In the multilayer structure of the present invention, the thermoplastic resin and/or the adhesive resin may be substituted by scrap of the multilayer structure. Moreover, scrap of another polyolefin shaped article may be mixed and used.

A method of producing the multilayer structure of the present invention is not particularly limited. Examples include a method in which a thermoplastic resin is melt extruded on a shaped article (film, sheet, and the like) obtained from the resin composition of the present invention, a method in which the resin composition and another thermoplastic resin are coextruded, a method in which the resin composition and a thermoplastic resin are coinjected, a method in which a shaped article formed from the resin composition and a film or a sheet of another substrate are laminated using a known adhesive, such as an organic titanium compound, an isocyanate compound, and a polyester-based compound, and the like.

### [Inner Container for Bag-in-Box]

An inner container for a bag-in-box of the present invention contains the multilayer structure of the present invention and includes at least one layer composed of the resin composition of the present invention. Examples of the inner container for a bag-in-box include a container having a liquid inlet formed of another resin composition and a container body formed of the above multilayer structure. Such inner container for a bag-in-box may be produced by, for example, heat sealing a film or a sheet of the multilayer structure and further heat sealing the liquid inlet. The heat sealing method may be appropriately selected from general heat sealing conditions. The entire inner container for a bag-in-box may be formed from the resin composition of the present invention.

In general, the inner container for a bag-in-box is bent repeatedly during transport and the like. When forming the inner container for a bag-in-box, process such as an increase in a thickness in the bending area or around a sealing plug may be applied. The inner container for a bag-in-box of the present invention can exhibit excellent durability, since the container includes a layer composed of the resin composition of the present invention having excellent bending resistance.

### EXAMPLES

The present invention is further described below with reference to Examples while the present invention is not limited to them at all. A resin composition and the like that were produced were evaluated in the following methods. The melt kneading conditions and the film formation conditions were as follows.

### [Ethylene Content and Degree of Saponification in EVOH (A)]

The ethylene content and the degree of saponification in EVOH (A) were obtained by ¹H-NMR measurement (measurement system: model "JNM-GX-500" manufactured by JEOL Ltd.) using DMSO-d₆ as a solvent.

### [Melt Flow Rate (MFR)]

The melt flow rate was determined by measuring an outlet velocity (g/10 min.) for a sample in the conditions of temperature of 210°C and a load of 2160 g using a melt indexer ("L244" manufactured by Takara Inc.).

### [Acid Value of Unmodified Ethylene-α-Olefin Copolymer (B) and Acid Modified Ethylene-α-Olefin Copolymer (C)]

The acid values were calculated by dissolving the unmodified ethylene-α-olefin copolymer (B) and the acid modified ethylene-α-olefin copolymer (C) in xylene, using phenolphthalein as an indicator, and dropping a 0.05 mol/L potassium hydroxide-ethanol solution thereto.

### [Melt Kneading Conditions]

The EVOH (A), the ethylene-α-olefin copolymer (B), the acid modified ethylene-α-olefin copolymer (C), and the alkali metal salt (D) were dry blended and then, in the following conditions, melt kneaded, pelletized, and dried to obtain pellets of the resin composition.

Apparatus: 26 mmφ twin screw extruder ("Labo Plastomill 15C300" manufactured by Toyo Seiki Seisaku-sho, Ltd.)
L/D: 25
Screws: same direction full engaging type
Number of Die Holes: 2 holes (3 mmφ)
Extrusion temperature (°C): C1 = 200, C2 to C5 = 230, Die = 230
Number of Revolutions: 100 rpm
Discharge amount: about 5 kg/hr.
Drying: hot air drying at 80°C for 6 hours

### [Evaluation of Die Build-Up Condition during Pelletization]

The condition of the resin adhered to the die (die build-up) during pelletization was evaluated according to the following criteria.
A: die build-up was not found and the strand was stable.
B: die build-up was found a little but the strand was stable.
C: die build-up was found and the strand was slightly disordered.
D: die build-up was found and the strand was disordered.

### [Single Layer Film Production Conditions]

A film was formed in the following conditions using the resin composition pellets thus obtained to produce a single layer film having a thickness of 20 µm.

Apparatus: 20 mmφ single screw extruder ("Labo Plastomill 15C300" manufactured by Toyo Seiki Seisaku-sho, Ltd.)
L/D: 20
Screws: full flight
Die: 300 mm coat hanger die
Extrusion temperature (°C): C1 = 200, C2 to C5 = 230, Die = 230
Screen: 50/100/50
Temperature of cooling roll: 80°C
Taking-off rate: from 3.0 to 3.5 m/min.
Film thickness: 20 µm

### [Multilayer Film Production Conditions]

A film was formed in the following conditions using the resin composition pellets thus obtained to produce a three-material five-layer multilayer film having a total thickness of 90 µm. In the descriptions below, "an adhesive resin layer" may be abbreviated as "Ad". "LLDPE" means linear low density polyethylene.

Layer Structure of Multilayer Film: LLDPE layer/Ad/resin composition layer/Ad/LLDPE layer

LLDPE: trade name "ULTZEX 2022L" produced by Prime Polymer Co., Ltd.

Adhesive resin: trade name "Admer NF500" produced by Mitsui Chemicals, Inc.

### (Production Conditions of Multilayer Film)

Apparatus: feedblock type three-material five-layer film extrusion molding machine
Die temperature: 220°C
Temperature of cooling roll: 60°C
Taking-off rate: 5.0 m/min.
Layer thickness: LLDPE layer 36 µm, adhesive resin layer 6 µm, resin composition layer 6 µm

### (LLDPE Layer Extruder Conditions)

Extruder: 32φ single screw extruder (manufactured by Research Laboratory of Plastics Technology Co., Ltd.)
Number of Revolutions: 57 rpm
Extrusion temperature: feeding unit/compression unit/weighing unit = 150°C/200°C/210°C

### (Adhesive Resin Layer Extruder Conditions)

Extruder: 20φ single screw extruder (manufactured by Technovel Corp.)
Number of Revolutions: 25 rpm
Extrusion temperature: feeding unit/compression unit/weighing unit = 150°C/200°C/220°C

### (Resin Composition Layer Extruder Conditions)

Extruder: 20φ single screw extruder (manufactured by Toyo Seiki Seisaku-sho, Ltd.)
Number of evolutions: 12.5 rpm
Extrusion temperature: feeding unit/compression unit/weighing unit = 175°C/210°C/220°C

### [Surface of Multilayer Film]

The surface of the multilayer film thus obtained was visually evaluated according to the following criteria.
A: film surface was good
B: slight streaks were found
C: noticeable streaks were found
D: layers were disordered

### [Bending Resistance]

The single layer film and the multilayer film thus obtained were humidity controlled in the conditions of 23°C/50% RH and then, using a Gelbo flex tester (manufactured by Rigaku Kogyo Corp.), bending properties were measured. Specifically, firstly, a film of 12 inches × 8 inches was put into a cylindrical shape with a diameter of 3.5 inches. Both ends of the cylinder were held to be subjected to a reciprocating motion, at a speed of 40 times/min., of a repeated movement in which, at an initial retention distance of 7 inches and a maximum bending retention distance of 1 inch, a twist at an angle of 440 degrees is applied in first 3.5 inches of a stroke and then a horizontal linear movement in the following 2.5 inches. The number of bending movements until the first pinhole was created was measured.

### [Tensile Modulus of Elasticity]

In accordance with JIS K 7161, the single layer film and the multilayer film thus obtained were humidity controlled in the conditions of 23°C/50% RH and then cut into a width of 15 mm and a length of 12 cm to prepare a strip for measurement. Measurement was conducted for the strip using AUTOGRAPH AGS-H (manufactured by Shimadzu Corp.) with the distance between chucks of 50 mm at a tensile speed of 5 mm/min.

### [Oxygen Transmission Rate]

The single layer film with a thickness of 20 µm thus obtained was humidity controlled in the conditions of 20°C/65% RH and then, using an oxygen transmission rate measurement system ("OX-Tran2/20" manufactured by Modern Controls, Inc.), an oxygen transmission rate was measured in the conditions of 20°C/65% RH.

### Example 1

70 parts by mass of EVOH (A-1) as the EVOH (A), 27 parts by mass of an ethylene-propylene copolymer (B-1) as the unmodified ethylene-α-olefin copolymer (B), 3 parts by mass of a maleic anhydride modified ethylene-propylene copolymer (C-1) as the acid modified ethylene-α-olefin copolymer (C), and 825 ppm (100 ppm in terms of potassium atoms) of potassium stearate as the alkali metal salt (D) were dry blended to obtain a resin composition.

(A-1): EVOH (ethylene content: 32 mol%, degree of saponification: 99 mol% or more, and MFR: 9.7 g/10 min. (at 210°C under a load of 2160 g)) produced by Kuraray Co., Ltd.
(B-1): an ethylene-propylene copolymer (trade name "TAFMER P0280", MFR: 3.0 g/10 min. (at 210°C under a load of 2160 g), density: 0.869 g/cm³, acid value: 0.0 mg KOH/g) produced by Mitsui Chemicals, Inc.
(C-1): a maleic anhydride modified ethylene-propylene copolymer (trade name "TAFMER MP0610", MFR: 0.6 g/10 min. (at 210°C under a load of 2160 g), density: 0.870 g/cm³, and acid value: 12.5 mg KOH/g) produced by Mitsui Chemicals, Inc.

Then, in the method described above, the resin composition was melt kneaded using a twin screw extruder and then pelletized. The resin composition pellets thus obtained were dried by a hot air drier at 80°C/6 hr. The resin composition pellets had an MFR of 3.4 g/10 min. (at 210°C under a load of 2160 g).

Using the resin composition pellets thus obtained, in the method described above, a single layer film with a thickness of 20 µm was prepared.

In addition, using the resin composition pellets thus obtained, in the method described above, a multilayer film was prepared. The multilayer film had a layer structure and a thickness as follows.

Layer structure: LLDPE layer/Ad/resin composition layer/Ad/LLDPE layer
The total thickness of 90 µm, the thickness of the resin composition layer of 6 µm, the thickness of the adhesive resin layer (Ad) of 6 µm, and the thickness of the LLDPE layer of 36 µm

### Example 2

Resin composition pellets were obtained by a method same as Example 1 other than changing the EVOH (A-1) to EVOH (A-2).

(A-2): EVOH (ethylene content: 27 mol%, degree of saponification: 99 mol% or more, and MFR: 8.9 g/10 min. (at 210°C under a load of 2160 g)) produced by Kuraray Co., Ltd.

The resin composition pellets thus obtained had an MFR of 3.0 g/10 min. (at 210°C under a load of 2160 g). Using the resin composition pellets, a single layer film (thickness of 20 µm) and a multilayer film were prepared in a method same as Example 1. Then, in the method described above, the single layer film and the multilayer film were evaluated.

### Example 3

Resin composition pellets were obtained by a method same as Example 1 other than using 70 parts by mass of the EVOH (A-1), 25.5 parts by mass of the ethylene-propylene copolymer (B-1), and 4.5 parts by mass of the maleic anhydride modified ethylene-propylene copolymer (C-1). The resin composition pellets thus obtained had an MFR of 2.8 g/10 min. (at 210°C under a load of 2160 g). Using the resin composition pellets, a single layer film and a multilayer film were prepared and evaluated in a method same as Example 1.

### Example 4

Resin composition pellets were obtained by a method same as Example 1 other than using 70 parts by mass of the EVOH (A-1), 24 parts by mass of the ethylene-propylene copolymer (B-1), and 6 parts by mass of the maleic anhydride modified ethylene-propylene copolymer (C-1). The resin composition pellets thus obtained had an MFR of 2.4 g/10 min. (at 210°C under a load of 2160 g). Using the resin composition pellets, a single layer film and a multilayer film were prepared and evaluated in a method same as Example 1.

### Example 5

Resin composition pellets were obtained in a method same as Example 1 other than using 70 parts by mass of the EVOH (A-1), 21 parts by mass of the ethylene-propylene copolymer (B-1), and 9 parts by mass of the maleic anhydride modified ethylene-propylene copolymer (C-1). The resin composition pellets thus obtained had an MFR of 2.0 g/10 min. (at 210°C under a load of 2160 g). Using the resin composition pellets, a single layer film and a multilayer film were prepared and evaluated in a method same as Example 1.

### Example 6

Resin composition pellets were obtained by a method same as Example 1 other than using 65 parts by mass of the EVOH (A-1), 31.5 parts by mass of the ethylene-propylene copolymer (B-1), and 3.5 parts by mass of the maleic anhydride modified ethylene-propylene copolymer (C-1). The resin composition pellets thus obtained had an MFR of 2.4 g/10 min. (at 210°C under a load of 2160 g). Using the resin composition pellets, a single layer film and a multilayer film were prepared and evaluated in a method same as Example 1.

### Example 7

Resin composition pellets were obtained by a method same as Example 1 other than using 80 parts by mass of the EVOH (A-1), 18 parts by mass of the ethylene-propylene copolymer (B-1), and 2 parts by mass of the maleic anhydride modified ethylene-propylene copolymer (C-1). The resin composition pellets thus obtained had an MFR of 3.9 g/10 min. (at 210°C under a load of 2160 g). Using the resin pellets, a single layer film and a multilayer film were prepared and evaluated in a method same as Example 1.

### Example 8

Resin composition pellets were obtained by a method same as Example 1 other than using 206 ppm (25 ppm in terms of potassium atoms) of potassium stearate as the alkali metal salt (D). The resin composition pellets thus obtained had an MFR of 3.9 g/10 min. (at 210°C under a load of 2160 g). Using the resin composition pellets, a single layer film and a multilayer film (8) were prepared and evaluated in a method same as Example 1.

### Example 9

Resin composition pellets were obtained by a method same as Example 1 other than using 412 ppm (50 ppm in terms of potassium atoms) of potassium stearate as the alkali metal salt (D). The resin composition pellets thus obtained had an MFR of 3.6 g/10 min. (at 210°C under a load of 2160 g). Using the resin composition pellets, a single layer film and a multilayer film (9) were prepared and evaluated in a method same as Example 1.

### Example 10

Resin composition pellets were obtained by a method same as Example 1 other than using 1650 ppm (200 ppm in terms of potassium atoms) of potassium stearate as the alkali metal salt (D). The resin composition pellets thus obtained had an MFR of 3.0 g/10 min. (at 210°C under a load of 2160 g). Using the resin composition pellets, a single layer film and a multilayer film were prepared and evaluated in a method same as Example 1.

### Example 11

Resin composition pellets (11) were obtained in a method same as Example 1 other than using 2062 ppm (250 ppm in terms of potassium atoms) of potassium stearate as the alkali metal salt (D). The resin composition pellets thus obtained had an MFR of 2.6 g/10 min. (at 210°C under a load of 2160 g). Using the resin composition pellets, a single layer film and a multilayer film were prepared and evaluated in a method same as Example 1.

### Example 12

Resin composition pellets were obtained by a method same as Example 1 other than using 2475 ppm (300 ppm in terms of potassium atoms) of potassium stearate as the alkali metal salt (D). The resin composition pellets thus obtained had an MFR of 2.1 g/10 min. (at 210°C under a load of 2160 g). Using the resin composition pellets, a single layer film and a multilayer film were prepared and evaluated in a method same as Example 1.

### Example 13

Resin composition pellets were obtained by a method same as Example 1 other than using 70 parts by mass of the (A-1) as the EVOH (A), 27 parts by mass of an ethylene-butene copolymer (B-2) as the unmodified ethylene-α-olefin copolymer (B), and 3 parts by mass of a maleic anhydride modified ethylene-butene copolymer (C-2) as the acid modified ethylene-α-olefin copolymer (C). The resin composition pellets thus obtained had an MFR of 3.5 g/10 min. (at 210°C under a load of 2160 g).

(B-2): an ethylene-butene copolymer (trade name "TAFMER A4085", MFR: 3.6 g/10 min. (at 210°C under a load of 2160 g), density: 0.885 g/cm³, and acid value: 0.0 mg KOH/g) produced by Mitsui Chemicals, Inc.
(C-2): a maleic anhydride modified ethylene-butene copolymer (trade name "TAFMER MA8510", MFR: 2.9 g/10 min. (at 210°C under a load of 2160 g), density: 0.885 g/cm³, and acid value: 5.5 mg KOH/g) produced by Mitsui Chemicals, Inc.

Using the resin composition pellets thus obtained, a single layer film and a multilayer film were prepared in a method same as Example 1 for evaluation.

### Comparative Example 1

The EVOH (A-1) was melt kneaded using a twin screw extruder and then pelletized. The resin composition pellets thus obtained were dried by a hot air drier at 80°C/6 hr. The resin composition pellets had an MFR of 3.4 g/10 min. (at 210°C under a load of 2160 g).

Using the resin composition pellets thus obtained, a single layer film with a thickness of 20 µm was prepared in a method same as Example 1.

In addition, using the resin composition pellets thus obtained, a multilayer film was prepared in a method same as Example 1. The multilayer film had a layer structure and a thickness as follows.

Layer structure: LLDPE layer/Ad/resin composition layer/Ad/LLDPE layer

The total thickness of 90 µm, the thickness of the resin composition layer of 6 µm, the thickness of the adhesive resin layer (Ad) of 6 µm, and the thickness of the LLDPE layer of 36 µm

Then, in the method described above, the single layer film and the multilayer film were evaluated. The resin composition pellets not containing the unmodified ethylene-α-olefin copolymer (B), the acid modified ethylene-α-olefin copolymer (C), and the alkali metal salt (D) had an MFR out of the values defined in the present invention. The multilayer film thus obtained had a film surface with noticeable streaks.

### Comparative Example 2

Resin composition pellets were obtained by a method same as Example 1 other than using 30 parts by mass of the ethylene-propylene copolymer (B-1) and not adding the acid modified ethylene-α-olefin copolymer (C). The resin composition pellets thus obtained had an MFR of 8.7 g/10 min. (at 210°C under a load of 2160 g). The resin composition pellets had poor compatibility even when the EVOH (A) and the ethylene-α-olefin copolymer were melt kneaded, and severe die build-up was found during pelletization.

In addition, using the resin composition pellets, preparation of a single layer film was attempted in a method same as Example 1. However, the poor compatibility between the EVOH (A) and the ethylene-α-olefin copolymer (B) caused an uneven film thickness, holes, and cuts, which did not allow film formation. Further, using the resin composition pellets, preparation of a multilayer film was attempted. However, the poor compatibility between the EVOH (A) and the ethylene-α-olefin copolymer (B) and the MFR out of the defined range caused an uneven film thickness, holes, and cuts, which did not allow film formation.

### Comparative Example 3

Resin composition pellets were obtained in a method same as Example 1 other than not adding the unmodified ethylene-α-olefin copolymer (B) and using 30 parts by mass of the maleic anhydride modified ethylene-propylene copolymer (C-1). The resin composition pellets thus obtained had an MFR of 0.1 g/10 min. (at 210°C under a load of 2160 g). In the method described above, the condition of die build-up during pelletization was evaluated. The resin composition pellets had an MFR markedly reduced because an excess of the graft polymer of the EVOH (A) and the acid modified ethylene-α-olefin copolymer (C) was produced in the extruder and entanglement between the EVOH (A) and the acid modified ethylene-α-olefin copolymer (C) increased. Therefore, even though preparation of a single layer film was attempted in a method same as Example 1, holes and cuts were found and did not allow film formation. Further, using the resin composition pellets, preparation of a multilayer film was attempted. However, severe streaks during film formation did not allow production of an evaluable film.

### Comparative Example 4

Resin composition pellets were obtained in a method same as Example 1 other than not adding the alkali metal salt (D). The resin composition pellets thus obtained had an MFR of 4.6 g/10 min. (at 210°C under a load of 2160 g). Since the resin composition pellets did not contain the alkali metal salt (D), reactivity between the EVOH (A) and the acid modified ethylene-α-olefin copolymer (C) was poor and severe die build-up was found during pelletization. In a method same as Example 1, a single layer film was prepared from the resin composition pellets. Then, although preparation of a multilayer film was attempted, the poor compatibility between the EVOH (A) and the ethylene-α-olefin copolymer (B) and the MFR out of the defined range caused an uneven film thickness, holes, and cuts, which did not allow film formation.

### Comparative Example 5

Resin composition pellets were obtained in a method same as Example 1 other than using EVOH (A-3) as the EVOH (A). The resin composition pellets thus obtained had an MFR of 1.5 g/10 min. (at 210°C under a load of 2160 g). Using the resin pellets, a single layer film and a multilayer film were prepared in a same manner as Example 1 for evaluation. The EVOH (A) and the resin composition had respective MFRs out of the defined range, and the multilayer film had the film surface with noticeably appeared streaks.

(A-3): EVOH (ethylene content: 32 mol%, degree of saponification: 99 mol% or more, and MFR: 3.8 g/10 min. (at 210°C under a load of 2160 g)) produced by Kuraray Co., Ltd.

### Comparative Example 6

Resin composition pellets were obtained in a method same as Example 1 other than using 70 parts by mass of the EVOH (A-1), 28.5 parts by mass of the ethylene-propylene copolymer (B-1), and 1.5 parts by mass of the maleic anhydride modified ethylene-propylene copolymer (C-1). The resin composition pellets thus obtained had an MFR of 4.2 g/10 min. (at 210°C under a load of 2160 g). Since the resin composition pellets had a less amount of acid modified ethylene-α-olefin copolymer (C), die build-up was found during pelletization. A single layer film and a multilayer film were prepared in a method same as Example 1. Then, the single layer film and the multilayer film were evaluated in a same manner as Example 1. The MFR was out of the defined range, and the multilayer film had the film surface with noticeably appeared streaks.

### Comparative Example 7

Resin composition pellets were obtained in a method same as Example 1 other than using 18 parts by mass of the ethylene-propylene copolymer (B-1) and 12 parts by mass of the maleic anhydride modified ethylene-propylene copolymer (C-1). The resin composition pellets thus obtained had an MFR of 1.1 g/10 min. (at 210°C under a load of 2160 g). Using the resin composition pellets, a single layer film and a multilayer film were prepared in a method same as Example 1 for evaluation. Since the resin composition pellets had a large amount of acid modified ethylene-α-olefin copolymer (C), the MFR was out of the defined range and the multilayer film had disordered layers.

### Comparative Example 8

Resin composition pellets were obtained in a method same as Example 1 other than using 90 parts by mass of the EVOH (A-1), 9 parts by mass of the ethylene-propylene copolymer (B-1), and 1 part by mass of the maleic anhydride modified ethylene-propylene copolymer (C-1). The resin composition pellets thus obtained had an MFR of 7.9 g/10 min. (at 210°C under a load of 2160 g). The resin composition pellets had a mass ratio [(A)/((B)+(C))] of the EVOH (A) to a total amount of the unmodified ethylene-α-olefin copolymer (B) and the acid modified ethylene-α-olefin copolymer (C) out of the defined range, and die build-up was found during pelletization. Although a single layer film and a multilayer film were prepared in a method same as Example 1, the MFR was out of the defined range and the multilayer film had a disordered surface layer.

### Comparative Example 9

Resin composition pellets were obtained in a method same as Example 1 other than using 60 parts by mass of the EVOH (A-1), 36 parts by mass of the ethylene-propylene copolymer (B-1), and 4 parts by mass of the maleic anhydride modified ethylene-propylene copolymer (C-1). The resin composition pellets thus obtained had an MFR of 1.9 g/10 min. (at 210°C under a load of 2160 g). The resin composition pellets had [(A)/((B)+(C))] out of the defined range, and die build-up was found during pelletization. In addition, a single layer film and a multilayer film were prepared in a method same as Example 1. The MFR was out of the defined range, and the multilayer film had a surface with noticeably appeared streaks.

### Comparative Example 10

Resin composition pellets were obtained in a method same as Example 1 other than using 20 parts by mass of the EVOH (A-1), 72 parts by mass of the ethylene-propylene copolymer (B-1), and 8 parts by mass of the maleic anhydride modified ethylene-propylene copolymer (C-1). The resin composition pellets thus obtained had an MFR of 2.0 g/10 min. (at 210°C under a load of 2160 g). In addition, a single layer film was prepared in a method same as Example 1. Since the single layer film thus obtained had [(A)/((B)+(C))] out of the defined range, the flexibility was too high to measure the tensile modulus of elasticity and the bending resistance was greatly improved, whereas the oxygen transmission rate became high. Since the oxygen transmission rate was high, a multilayer film was not prepared.

For Examples and Comparative Examples above, the conditions of die build-up during pelletization; the bending resistance, the tensile moduli of elasticity, and the oxygen transmission rates of the 20 µm single layer films; and the film surfaces, the bending resistance, and the tensile moduli of elasticity of the 90 µm multilayer films were evaluated. The results are summarized in Table 1.

**[Table 1]**

| | Composition Conditions | | | | | | | | | | Resin Composition Pellets | | Evaluation Of Single Layer Film | | | Evaluation Of Multilayer Film | | |
|---|---|---|---|---|---|---|---|---|---|---|---|---|---|---|---|---|---|---|
| | EVOH (A) | | | Unmodified Ethylene-α-Olefin Copolymer (B) | | Acid Modified Ethylene-α-Olefin Copolymer (C) | | Alkali Metal (D) | Mass Ratio (A)/ [(B)+(C)] | Mass Ratio (B)/(C) | MFR 210°C/ 2160 g (g/ 10 min) | Die Build-up during Pelletization | Bending Resist- ance (times) | Tensile Modulus of Elasticity (MPa) | Coefficient of Oxygen Transmission 20°C/ 65%RH (ml•20 µm/ (m²•day•atm)) | Bending Resist- ance (times) | Tensile Modulus of Elasticity (MPa) | Film Surface of Multilayer Film |
| | Type | MFR 210°C/ 2160 g (g/ 10 min) | parts by mass | Type | Parts by mass | Type | Parts by mass | ppm^{*1)} | | | | | | | | | | |
| Example 1 | A-1 | 9.7 | 70 | B-1 | 27 | C-1 | 3 | 100 | 70/30 | 90/10 | 3.4 | A | 300 | 1400 | 0.7 | 1100 | 100 | A |
| Example 2 | A-2 | 8.9 | 70 | B-1 | 27 | C-1 | 3 | 100 | 70/30 | 90/10 | 3.0 | A | 280 | 1300 | 0.7 | 1100 | 110 | A |
| Example 3 | A-1 | 9.7 | 70 | B-1 | 25.5 | C-1 | 4.5 | 100 | 70/30 | 85/15 | 2.8 | A | 280 | 1300 | 0.7 | 1100 | 100 | A |
| Example 4 | A-1 | 9.7 | 70 | B-1 | 24 | C-1 | 6 | 100 | 70/30 | 80/20 | 2.4 | A | 320 | 1300 | 0.7 | 1100 | 100 | B |
| Example 5 | A-1 | 9.7 | 70 | B-1 | 21 | C-1 | 9 | 100 | 70/30 | 70/30 | 2.0 | A | 340 | 1300 | 0.7 | 1100 | 100 | B |
| Example 6 | A-1 | 9.7 | 65 | B-1 | 31.5 | C-1 | 3.5 | 100 | 65/35 | 90/10 | 2.4 | B | 340 | 1000 | 0.8 | 1100 | 90 | B |
| Example 7 | A-1 | 9.7 | 80 | B-1 | 18 | C-1 | 2 | 100 | 80/20 | 90/10 | 3.9 | B | 240 | 1800 | 0.6 | 1100 | 120 | B |
| Example 8 | A-1 | 9.7 | 70 | B-1 | 27 | C-1 | 3 | 25 | 70/30 | 90/10 | 3.9 | B | 300 | 1400 | 0.7 | 1100 | 100 | B |
| Example 9 | A-1 | 9.7 | 70 | B-1 | 27 | C-1 | 3 | 50 | 70/30 | 90/10 | 3.6 | B | 280 | 1400 | 0.7 | 1100 | 110 | B |
| Example 10 | A-1 | 9.7 | 70 | B-1 | 27 | C-1 | 3 | 200 | 70/30 | 80/20 | 3.0 | A | 290 | 1300 | 0.7 | 1100 | 110 | A |
| Example 11 | A-1 | 9.7 | 70 | B-1 | 27 | C-1 | 3 | 250 | 70/30 | 80/20 | 2.6 | A | 310 | 1300 | 0.7 | 1100 | 100 | A |
| Example 12 | A-1 | 9.7 | 70 | B-1 | 27 | C-1 | 3 | 300 | 70/30 | 80/20 | 2.1 | A | 320 | 1300 | 0.7 | 1100 | 110 | B |
| Example 13 | A-1 | 9.7 | 70 | B-2 | 27 | C-2 | 3 | 100 | 70/30 | 90/10 | 3.5 | A | 290 | 1500 | 0.7 | 1100 | 100 | A |
| Comparative Example 1 | A-1 | 9.7 | 100 | - | - | - | - | - | - | - | 9.7 | A | 30 | 2700 | 0.4 | 900 | 230 | C |
| Comparative Example 2 | A-1 | 9.7 | 70 | B-1 | 30 | - | - | 100 | 70/30 | 90/10 | 8.7 | D | Film Formation Not Possible | | | Film Formation Not Possible | | - |
| Comparative Example 3 | A-1 | 9.7 | 70 | - | - | C-1 | 30 | 100 | 70/30 | 90/10 | 0.1 | A | Film Formation Not Possible | | | Evaluation Not Possible | | - |
| Comparative Example 4 | A-1 | 9.7 | 70 | B-1 | 27 | C-1 | 3 | - | 70/30 | 90/10 | 4.6 | D | 150 | 1200 | 0.7 | Evaluation Not Possible | | - |
| Comparative Example 5 | A-3 | 3.8 | 70 | B-1 | 27 | C-1 | 3 | 100 | 70/30 | 90/10 | 1.5 | A | 300 | 1500 | 0.7 | 1000 | 100 | C |
| Comparative Example 6 | A-1 | 9.7 | 70 | B-1 | 28.5 | C-1 | 1.5 | 100 | 70/30 | 95/5 | 4.2 | C | 250 | 1300 | 0.7 | 1000 | 110 | C |
| Comparative Example 7 | A-1 | 9.7 | 70 | B-1 | 18 | C-1 | 12 | 100 | 70/30 | 60/40 | 1.1 | A | 230 | 1300 | 0.7 | 1000 | 110 | D |
| Comparative Example 8 | A-1 | 9.7 | 90 | B-1 | 9 | C-1 | 1 | 100 | 90/10 | 90/10 | 7.9 | C | 200 | 2100 | 0.5 | 1000 | 150 | D |
| Comparative Example 9 | A-1 | 9.7 | 60 | B-1 | 36 | C-1 | 4 | 100 | 60/40 | 90/10 | 1.9 | C | 360 | 800 | 1.0 | 1100 | 80 | C |
| Comparative Example 10 | A-1 | 9.7 | 20 | B-1 | 72 | C-1 | 8 | 100 | 20/80 | 90/10 | 2.0 | C | 1100 | Measurement Not Possible | Over 200 | Film Formation Not Performed | | |

| | | | | | | | | | | | | | | | | | | |
|---|---|---|---|---|---|---|---|---|---|---|---|---|---|---|---|---|---|---|
| *1) In terms of potassium atoms | | | | | | | | | | | | | | | | | | |

The multilayer films in Examples produced from the resin compositions having an MFR in the defined range had better film surfaces than those of the multilayer film in Comparative Examples. The resin compositions in Examples containing the alkali metal salt (D) had higher reactivity between the EVOH (A) and the acid modified ethylene-α-olefin copolymer (C) because of the alkali metal salt (D), and compatibility between the EVOH (A) and the ethylene-α-olefin copolymer (B) was improved. Therefore, formation of die build-up during pelletization was significantly inhibited.

### [Method of Preparing Inner Container for Bag-In-Box and Bag-In-Box]

The multilayer film thus obtained having a total thickness of 90 µm and a structure of LLDPE/Ad/resin composition/Ad/LLDPE was cut out into 230 mm × 180 mm. Subsequently, a hole with a diameter of 43 mm was made in the film. The multilayer film without the hole was laminated with the above multilayer film and heat sealed on three sides to prepare a bag. Then, a sealing plug of high density polyethylene was attached to the hole and heat sealed for fixation. To the bag thus obtained, 1.5 L of water was added and the remaining side was heat sealed for tight sealing to prepare a bag (inner container for a bag-in-box) filled with water. The bag thus obtained was stored in a corrugated cardboard box of 190 mm × 130 mm × 65 mm to prepare a bag-in-box.

### [Transport Packaging Test]

The bag-in-box thus obtained was subjected to package transportation test in the following conditions using a package transportation tester ("BF-50UT" manufactured by Idex Co., Ltd.). After the package transportation test, presence of pinholes was evaluated from water leakage from the bag.

Frequency: from 10 to 25 Hz
Sweep Time: 120 seconds
Number of Sweeps: 30 times

### Example 14

Using the multilayer film in Example 1, a bag-in-box was prepared in the method described above to perform transport packaging test. The inner container for a bag-in-box was readily prepared. During the transport packaging test, no pinhole was found in the inner container for a bag-in-box inside the bag-in-box and water did not leak from the inner container for a bag-in-box.

### Comparative Example 11

Using the multilayer film in Comparative Example 1, a bag-in-box was prepared in the method described above to perform transport packaging test. The inner container for a bag-in-box was readily prepared. In the package transportation test, it was found that pinholes were created in the inner container inside the box at portions facing corners of the corrugated cardboard box, and thereby water leaked from the inner container.

## Claims

1. A resin composition comprising: an ethylene-vinyl alcohol copolymer (A);
an unmodified ethylene-α-olefin copolymer (B); an acid modified ethylene-α-olefin copolymer (C); and alkali metal salt (D), wherein
a mass ratio [(A)/((B)+(C))] of the ethylene-vinyl alcohol copolymer (A) to a total amount of the unmodified ethylene-α-olefin copolymer (B) and the acid modified ethylene-α-olefin copolymer (C) is from 80/20 to 65/35,
a mass ratio [(B)/(C)] of the unmodified ethylene-α-olefin copolymer (B) to the acid modified ethylene-α-olefin copolymer (C) is from 92/8 to 70/30,
the ethylene-vinyl alcohol copolymer (A) has a melt flow rate (MFR) (at 210°C under a load of 2160 g) of not less than 8.0 g/10 min. and not more than 15 g/10 min.,
a content of the alkali metal salt (D) is not less than 25 ppm and not more than 300 ppm in terms of metal based on a total amount of the ethylene-vinyl alcohol copolymer (A), the unmodified ethylene-α-olefin copolymer (B), and the acid modified ethylene-α-olefin copolymer (C), and
the resin composition has an MFR (at 210°C under a load of 2160 g) of not less than 2.0 g/10 min. and not more than 4.0 g/10 min.

2. The resin composition according to claim 1, wherein the unmodified ethylene-α-olefin copolymer (B) is an ethylene-propylene copolymer.

3. The resin composition according to claim 1 or 2, wherein the modified ethylene-α-olefin copolymer (C) is a maleic anhydride modified ethylene-propylene copolymer.

4. The resin composition according to any one of claims 1 to 3, wherein an oxygen transmission rate at 20°C/65% RH is 10 ml•20 µm/(m²•day•atm) or less.

5. A multilayer structure comprising a layer of the resin composition according to any one of claims 1 to 4.

6. An inner container for a bag-in-box comprising the multilayer structure according to claim 5.

## Patentansprüche

1. Harzzusammensetzung, umfassend: ein Ethylen-Vinylalkohol-Copolymer (A); ein unmodifiziertes Ethylen-α-Olefin-Copolymer (B); ein säuremodifiziertes Ethylen-α-Olefin-Copolymer (C); und Alkalimetallsalz (D), wobei ein Massenverhältnis [(A)/((B)+(C))] des Ethylen-Vinylalkohol-Copolymers (A) zu einer Gesamtmenge des unmodifizierten Ethylen-α-Olefin-Copolymers (B) und des säuremodifizierten Ethylen-α-Olefin-Copolymers (C) von 80/20 bis 65/35 beträgt,
ein Massenverhältnis [(B)/(C)] des unmodifizierten Ethylen-α-Olefin-Copolymers (B) zu dem säuremodifizierten Ethylen-α-Olefin-Copolymer (C) von 92/8 bis 70/30 beträgt,
das Ethylen-Vinylalkohol-Copolymer (A) eine Schmelzflussrate (MFR) (bei 210°C unter einer Last von 2160 g) von nicht weniger als 8,0 g/10 Min. und nicht mehr als 15 g/10 Min. aufweist,
ein Gehalt des Alkalimetallsalzes (D) nicht weniger als 25 ppm und nicht mehr als 300 ppm, in Bezug auf Metall, basierend auf einer Gesamtmenge des Ethylen-Vinylalkohol-Copolymers (A), des unmodifizierten Ethylen-α-Olefin-Copolymers (B) und des säuremodifizierten Ethylen-α-Olefin-Copolymers (C), beträgt und
die Harzzusammensetzung eine MFR (bei 210°C unter einer Last von 2160 g) von nicht weniger als 2,0 g/10 Min. und nicht mehr als 4,0 g/10 Min. aufweist.

2. Harzzusammensetzung nach Anspruch 1, wobei das unmodifizierte Ethylen-α-Olefin-Copolymer (B) ein Ethylen-Propylen-Copolymer ist.

3. Harzzusammensetzung nach Anspruch 1 oder 2, wobei das modifizierte Ethylen-α-Olefin-Copolymer (C) ein Maleinsäureanhydrid-modifiziertes Ethylen-Propylen-Copolymer ist.

4. Harzzusammensetzung nach einem der Ansprüche 1 bis 3, wobei eine Sauerstofftransmissionsrate bei 20°C/65% RH 10 ml•20 µm/(m²•Tag•atm) oder weniger beträgt.

5. Mehrschichtstruktur, umfassend eine Schicht der Harzzusammensetzung nach einem der Ansprüche 1 bis 4.

6. Innenbehälter für eine Bag-in-Box, umfassend die Mehrschichtstruktur nach Anspruch 5.

## Revendications

1. Composition de résine comprenant : un copolymère éthylène-alcool vinylique (A) ; un copolymère éthylène-α-oléfine non modifié (B) ; un copolymère éthylène-α-oléfine modifié par un acide (C) ; et un sel de métal alcalin (D), où le rapport massique [(A)/((B)+(C))] du copolymère éthylène-alcool vinylique (A) à la quantité totale du copolymère éthylène-α-oléfine non modifié (B) et du copolymère éthylène-α-oléfine modifié par un acide (C) se situe dans l'intervalle allant de 80/20 à 65/35,
le rapport massique [(B)+(C)] du copolymère éthylène-α-oléfine non modifié (B) au copolymère éthylène-α-oléfine modifié par un acide (C) se situe dans l'intervalle allant de 92/8 à 70/30,
le copolymère éthylène-alcool vinylique (A) présente une fluidité (MFR) (à 210°C et sous une charge de 2160 g) non inférieure à 8,0 g/10 minutes, et non supérieure à 15 g/10 minutes,
la teneur en sel de métal alcalin (D) est non inférieure à 25 ppm et non supérieure à 300 ppm en termes de métal sur base de la quantité totale du copolymère éthylène-alcool vinylique (A), copolymère éthylène-α-oléfine non modifié (B) et copolymère éthylène-α-oléfine modifié par un acide (C), et
la composition de résine présente une fluidité (MFR) (à 210°C et sous une charge de 2160 g) non inférieure à 2,0 g/10 minutes, et non supérieure à 4,0 g/10 minutes.

2. Composition de résine selon la revendication 1, dans laquelle le copolymère éthylène-α-oléfine non modifié (B) est un copolymère éthylène-propylène.

3. Composition de résine selon la revendication 1 ou 2, dans laquelle le copolymère éthylène-α-oléfine modifié (C) est un copolymère éthylène-propylène modifié par l'anhydride maléique.

4. Composition de résine selon l'une quelconque des revendications 1 à 3, dans lequel le taux de transmission de l'oxygène à 20°C/65% d'HR se situe à 10 ml•20 µm/(m²•jour•atm) ou moins.

5. Structure multicouche comprenant une couche de la composition de résine selon l'une quelconque des revendications 1 à 4.

6. Récipient intérieur pour caisse-outre comprenant la structure multicouche selon la revendication 5.
